# EUROPÄISCHE PATENTSCHRIFT

(11) **EP 0 566 108 B1**
(45) Veröffentlichungstag und Bekanntmachung des Hinweises auf die Patenterteilung: **21.02.1996**
(21) Anmeldenummer: 93106112.1
(22) Anmeldetag: 15.04.1993
(51) Int. Cl.: F16F 15/28, E05D 13/00, A61B 6/00

(54) **Vorrichtung zur Erzeugung eines Gegengewichtes an verstellbaren Bauteilen**
Device to act as a counterweight for adjustable parts
Dispositif pour produire un contre-poids à des éléments déplaçables

(30) Priorität: 16.04.1992 CH 1275/92
(43) Veröffentlichungstag der Anmeldung: 20.10.1993
(73) Patentinhaber: HUNZIKER AG, CH-8800 Thalwil (CH)
(72) Erfinder: Hunziker, Willi, CH-8800 Thalwil (CH)
(74) Vertreter: Petschner, Goetz

(56) Entgegenhaltungen:
- EP-A- 0 390 178
- DE-A- 2 737 493
- FR-A- 2 354 484
- FR-A- 2 653 485

## Beschreibung

Die vorliegende Erfindung betrifft eine Vorrichtung zur Erzeugung eines Gegengewichtes an verstellbaren Bauteilen, gemäß Oberbegriff des Anspruchs 1. Eine derartige Vorrichtung ist aus der DE-A-2 737 493 (Figur 4) bekannt.

Verstellbare, insbesondere stufenlos verstellbare Bauteile, wie kippbare oder höhenverstellbare Tafeln, Projektionswände, Tore, Fenster, Lüftungsklappen u. dgl. bedürfen einer, mindestens einer Teilverstellung entgegenwirkenden Ausgleichskraft, was in der Regel mit Gasfedern, gegebenenfalls auch mit Federmitteln mit progressiver Kennlinie erreicht wird.

Nachteilig dabei ist der hiefür relativ hohe und teure technische Aufwand an Gasfedermitteln oder Federmitteln mit progressiver Kennlinie, der oft einer Ausführung von solchen Stellmitteln an den relativ einfachen Bauteilen entgegensteht.

Aufgabe der vorliegenden Erfindung ist deshalb die Schaffung einer Vorrichtung zur Erzeugung eines Gegengewichtes an verstellbaren Bauteilen der vorgenannten Art, welche sehr einfach und somit verwendungsgerecht kostengünstig ist bei einer hohen und wartungsfreien Funktionssicherheit.

Dies wird erfindungsgemäss zunächt erreicht durch die Merkmale des Anspruchs 1.

Ein solcher erfindungsgemässer Stellmechanismus ist neben seinem sehr einfachen Aufbau von hoher Wirksamkeit und Sicherheit und gewährleistet ein stufenloses Verstellen praktisch aller schwenkbaren und höhenverstellbaren Bauteile oder lässt sich auch als Zuggewicht an Krafttrainingsgeräten einsetzen.

Durch die auf Zug hin sich nacheinander durch Strecken des betreffenden Schnurabschnittes aus der unteren Stapellage nach oben bewegenden und so als sich addierendes Gegengewicht wirksamen Gewichtscheiben wird in jeder Zwischenstellung des verstellten Bauteiles ein Gleichgewicht zwischen Stellmechanismus und Bauteil erreicht, das dann in der verstellten Lage verharrt.

Die Mitnahmeverbindung zwischen Schnur und Gewichtscheiben kann dabei durch einfache Schnur-Knoten erreicht werden.

Der Zylinder ist vorzugsweise von rundem Querschnitt.

Durch geeignete Wahl der Länge des Zylinders, der Anzahl der Gewichtscheiben und deren Gewicht lässt sich der erfindungsgemässe Stellmechanismus praktisch unbegrenzt einsetzen.

Vorzugsweise besteht eine weitere Ausgestaltung des erfindungsgemässen Stellmechanismus darin, dass in der oberen Stirnwand des Zylinders mindestens eine regelbare Luft-Durchtrittsöffnung vorgesehen ist, deren Querschnitt ein Mass für die Dämpfung bei Zugbelastung bildet.

Ein gedämpftes Absinken der Gewichtscheiben im Zylinder bis zur Stapellage bei Zugentlastung durch Rückstellung des Bauteiles kann beeinflusst werden, indem zwischen jeder Gewichtscheibe und dem Zylinder ein Ringspalt und/oder in jeder Gewichtscheibe Durchtrittsöffnungen für die Luft bestehen, deren gemeinsamer Querschnitt ein Mass für die Dämpfung ist.

Eine weitere Dämpfung kann dann erreicht werden, wenn an den Umlenkmitteln für die Schnur Bremsmittel angreifen.

Ferner betrifft die vorliegende Erfindung eine Verwendung der erfindungsgemässen Vorrichtung zur Erzeugung eines Gegengewichtes an vorzugsweise stufenlos kippbaren oder höhenverstellbaren Tafeln, Projektionswänden, Toren, Fenster u. dgl..

Beispielsweise Ausführungsformen des Erfindungsgegenstandes sind nachfolgend anhand der Zeichnung näher erläutert. Es zeigen:
- Fig.1: in schematischer Darstellung im Schnitt einen erfindungsgemässen Stellmechanismus; und
- Fig.2 bis 4: in schematischer Darstellung in kleinerem Massstab den Stellmechanismus gemäss Fig. 1 an einer vertikalen Belüftungsklappe resp. horizontalen Belüftungsklappe resp. an einem Kipptor.

Die Vorrichtung zur Erzeugung eines Gegengewichtes an einem verstellbaren Bauteil, hier an einer mit einer Montageplatte 20 über Geleenkmittel 21 verbundenen, schrägstellbaren Tafel oder Projektionswand 5, umfasst ein, im wesentlichen vertikales pneumatisches Kolben-Zylinder-System 1 mit mindestens einer Durchtrittsöffnung 11 in der oberen Stirnwand 12 des Zylinders 6 für die Kolbenstange 3 und einen Luftdurchtritt, wobei der Kolben aus einer Mehrzahl voneinander getrennten Gewichtscheiben 2 besteht, die je durch einen Abschnitt 3' einer, die Kolbenstange 3 bildenden Schnur miteinander wirkungsverbunden sind. Das freie Ende der Schnur 3 ist über eine Umlenkscheibe 4 geführt und greift am Bauteil 5 an.

Durch die auf Zug hin sich nacheinander durch Strecken des betreffenden Schnurabschnittes 3' aus der unteren Stapellage nach oben bewegenden und so als sich addierendes Gegengewicht wirksamen Gewichtscheiben 2 wird in jeder Zwischenstellung des verstellten Bauteiles 5 ein Gleichgewicht zwischen Stellmechanismus und Bauteil erreicht, das dann in der verstellten Lage verharrt.

Die Mitnahmeverbindung zwischen Schnur 3 resp. Schnurabschnitt 3'und betreffender Gewichtscheibe 2 wird durch einen einfachen Schnur-Knoten 3" erreicht.

Der Zylinder ist vorzugsweise von rundem Querschnitt.

Durch geeignete Wahl der Länge des Zylinders 6, der Anzahl der Gewichtscheiben 2 und deren Gewicht lässt sich der erfindungsgemässe Stellmechanismus praktisch unbegrenzt einsetzen.

Weiter ist in der oberen Stirnwand 12 des Zylinders 6 mindestens eine regelbare Luft-Durchtrittsöffnung (nicht gezeigt) vorgesehen, deren Querschnitt ein Mass für die Dämpfung bei Zugbelastung in Richtung des Pfeiles 16 bildet.

Ein gedämpftes Absinken der Gewichtscheiben 2 im Zylinder 6 bis zur Stapellage bei Zugentlastung durch Rückstellung des Bauteiles 5 kann beeinflusst werden, indem zwischen jeder Gewichtscheibe 2 und dem Zylinder 6 ein Ringspalt 7 und/oder in jeder Gewichtscheibe Durchtrittsöffnungen für die Luft (nicht gezeigt) bestehen, deren gemeinsamer Querschnitt ein Mass für die Dämpfung ist.

Eine weitere Dämpfung kann dann erreicht werden, wenn an der Umlenkscheibe 4 für die Schnur 3 Bremsmittel 17 angreifen.

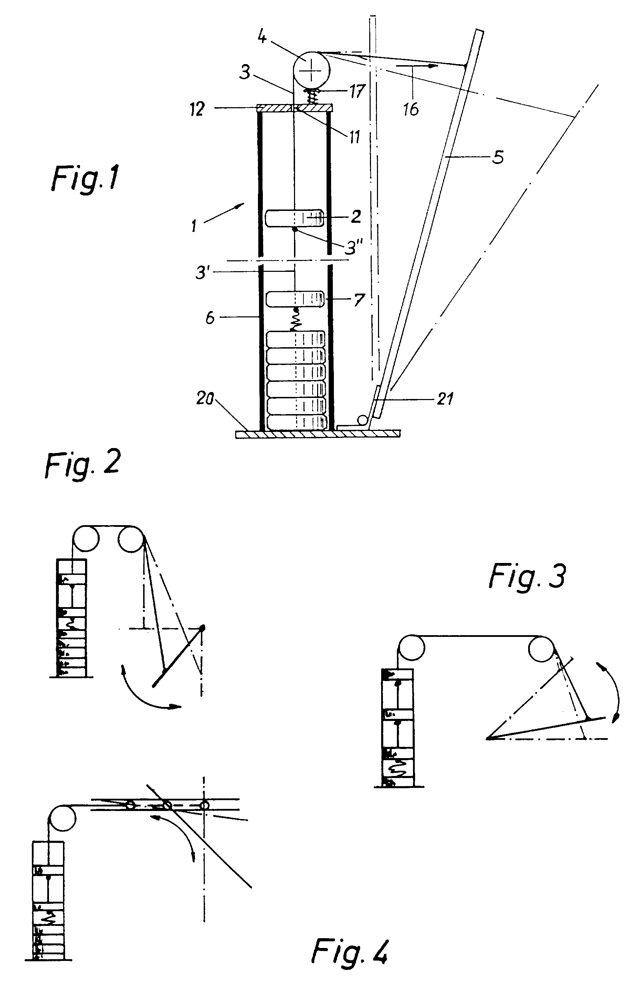

Wie die Fig.2 bis 4 mehr im Einzelnen zeigen, besteht für den vorbeschriebenen erfindungsgemässen Verstellmechanismus ein grosser Anwendungsbereich, etwa in Verbindung mit einer vertikalen (Fig.2) oder horizontalen Lüftungsklappe (Fig.3) oder in Verbindung mit einem Kipptor (Fig.4) u. dgl..

Abgesehen seiner klar erkennbaren einfachen Konzeption lässt sich der erfindungsgemässe Verstellmechanismus praktisch beliebig anwenden, auch etwa als Zuggewicht an Krafttrainingsgeräten.

## Patentansprüche

1. Vorrichtung zur Erzeugung eines Gegengewichtes an verstellbaren Bauteilen, bestehend aus einem im wesentlichen vertikalen Kolben-Zylinder-System (1) mit mindestens einer Durchtrittsöffnung (11) in der oberen Stirnwand (12) des Zylinders (6) für die Kolbenstange (3), wobei der Kolben aus einer Mehrzahl voneinander getrennten Gewichtscheiben (2) besteht, die je durch einen Abschnitt (3') einer, die Kolbenstange (3) bildenden Schnur miteinander wirkungsverbunden sind, deren freies Ende, über Umlenkmittel (4) geführt, zum Angreifen am Bauteil (5) bestimmt ist, dadurch gekennzeichnet, daß das Kolben-Zylinder-System ein pneumatisches Kolben-Zylinder-System (1) ist derart, daß die Durchtrittsöffnung (11) in der oberen Stirnwand zugleich einen dämpfwirksamen Luftdurchtritt bildet, dessen Querschnitt das Mass für die Dämpfung bei Zugbelastung bestimmt.

2. Verstellmechanismus nach Anspruch 1, dadurch gekennzeichnet, dass die Mitnahmeverbindung zwischen Schnur (3) und Gewichtscheiben (2) durch einfache Schnur-Knoten (3'') erreicht wird.

3. Verstellmechanismus nach Anspruch 1, dadurch gekennzeichnet, dass der Zylinder (6) vorzugsweise von rundem Querschnitt ist.

4. Verstellmechanismus nach Anspruch 1, dadurch gekennzeichnet, dass in der oberen Stirnwand (12) des Zylinders (6) mindestens eine regelbare Luft-Durchtrittsöffnung vorgesehen ist, deren Querschnitt ein Mass für die Dämpfung bei Zugbelastung bildet.

5. Verstellmechanismus nach Anspruch 1, dadurch gekennzeichnet, dass zwischen jeder Gewichtscheibe (2) und dem Zylinder (6) ein Ringspalt (7) und/oder in jeder Gewichtscheibe (2) Durchtrittsöffnungen für die Luft bestehen, deren gemeinsamer Querschnitt ein Mass für die Dämpfung ist.

6. Verstellmechanismus nach Anspruch 1, dadurch gekennzeichnet, dass an den Umlenkmitteln (4) für die Schnur (3) Bremsmittel (17) angreifen.

7. Verwendung der Vorrichtung nach einem oder mehreren der vorstehenden Ansprüche 1 bis 6, zur Erzeugung eines Gegengewichtes an vorzugsweise stufenlos kippbaren oder höhenverstellbaren Tafeln, Projektionswänden, Toren, Fenster u. dgl..

## Claims

1. An apparatus to act as a counterweight in adjustable parts, consisting of a substantially vertical pneumatic cylinder-piston system (1) with at least one pass-through opening (11) in the upper face wall (12) of the cylinder (6) for the piston rod (3), with the piston consisting of a plurality of mutually separated wheel weights (2) which are each operatively connected through a section (3') of a rope forming the piston rod (3) whose free end is guided over a deflection pulley (4) for acting on the part (5), characterized in that the piston-cylinder system is a piston-cylinder system (1) in such a way that the pass-through opening (11) in the upper face wall simultaneously forms a damping-effective air passage whose cross section determines the measure for the damping under traction load.

2. An adjusting mechanism as claimed in claim 1, characterized in that the entraining connection between the rope (3) and the wheel weights (2) is achieved by simple knots (3") in the rope.

3. An adjusting mechanism as claimed in claim 1, characterized in that the cylinder (6) is preferably provided with a circular cross section.

4. An adjusting mechanism as claimed in claim 1, characterized in that at least one controllable air pass-through opening is provided in the upper face wall (12) of the cylinder (6) whose cross section forms a measure for the damping under traction load.

5. An adjusting mechanism as claimed in claim 1, characterized in that an annular gap (7) is provided between each wheel weight (2) and the cylinder (6) and/or pass-through openings for the air in each wheel weight whose common cross section is a measure for the damping.

6. An adjusting mechanism as claimed in claim 1, characterized in that braking means (17) act on the deflection means (4) for the rope (3).

7. An application of the apparatus as claimed in one or several of the preceding claims 1 to 6 to act as a counterweight in preferably continously tiltable or height-adjustable boards, screens, doors, windows and the like.

## Revendications

1. Dispositif pour la réalisation d'un contrepoids sur des composants réglables, se composant d'un système de vérin à piston sensiblement vertical (1) présentant une ouverture de passage (11) dans la paroi frontale (12) du vérin (6) pour la tige de piston (3), le piston se composant d'une pluralité de galettes de poids (2) séparées les unes des autres, qui sont reliées activement entre elles par une portion (3') d'un cordon formant la tige de piston (3), dont l'extrémité libre intervient sur le composant (5) par le guidage de moyens de renvoi (4), caractérisé en ce que le système de vérin à piston est un système pneumatique de vérin à piston (1) de manière que l'ouverture de passage (11) forme en même temps un passage d'air amortisseur dont la section transversale détermine la mesure pour l'amortissement lors de la sollicitation à la traction.

2. Mécanisme de réglage selon la revendication 1, caractérisé en ce que la liaison d'entraînement entre le cordon (3) et les galettes de poids (2) est réalisée par de simples noeuds de cordon (3").

3. Mécanisme de réglage selon la revendication 1, caractérisé en ce que la section transversale du vérin (6) est de préférence ronde.

4. Mécanisme de réglage selon la revendication 1, caractérisé en ce qu'il est prévu sur la paroi frontale (12) du vérin (6) au moins une ouverture réglable de passage de l'air dont la section transversale est une mesure pour l'amortissement lors de la sollicitation à la traction.

5. Mécanisme de réglage selon la revendication 1, caractérisé en ce qu'entre chaque galette de poids (2) et le vérin (6), il existe une fente annulaire (7) et/ou, dans chaque galette de poids (2), des orifices de passage pour l'air, dont la section transversale est une mesure pour l'amortissement.

6. Mécanisme de réglage selon la revendication 1, caractérisé en ce que, sur les moyens de renvoi (4) du cordon (3), interviennent des moyens de freinage (17).

7. Utilisation du dispositif selon l'une ou plusieurs des revendications précédentes 1 à 6, pour la réalisation d'un contrepoids sur des tableaux, écrans de projection, portails, fenêtres et similaires, de préférence basculants ou réglables en hauteur.
